# EUROPÄISCHE PATENTSCHRIFT

(11) **EP 3 660 110 B1**
(45) Veröffentlichungstag und Bekanntmachung des Hinweises auf die Patenterteilung: **05.01.2022**
(21) Anmeldenummer: 19000534.8
(22) Anmeldetag: 26.11.2019
(51) Int. Cl.: C09D 11/02, B41M 3/14, C09D 11/03, C09D 11/08, C09D 11/10, C09D 11/105, C09D 11/12

(54) **DRUCKFARBE ODER LACK FÜR DEN SICHERHEITSDRUCK, BEDRUCKTES SICHERHEITSSUBSTRAT UND ZUGEHÖRIGES VERFAHREN**
PRINTING INK OR PAINT FOR SAFETY PRINTING, PRINTED SAFETY SUBSTRATE AND ASSOCIATED METHOD
ENCRE D'IMPRIMERIE OU LAQUE DESTINÉE À L'IMPRESSION DE SÉCURITÉ, SUBSTRAT DE SÉCURITÉ IMPRIMÉ ET PROCÉDÉ ASSOCIÉ

(30) Priorität: 28.11.2018 DE 102018009359
(43) Veröffentlichungstag der Anmeldung: 03.06.2020
(73) Patentinhaber: Giesecke+Devrient Currency Technology GmbH, 81677 München (DE)
(72) Erfinder: Mengel, Christoph, 83607 Holzkirchen (DE); Olschewski, Günter, 04683 Naunhof (DE); Murvai, Geza, 04129 Leipzig (DE)
(74) Vertreter: Giesecke + Devrient IP

(56) Entgegenhaltungen:
- EP-A1- 2 014 729
- EP-A2- 0 327 788
- DE-A1-102011 116 490

## Beschreibung

Die Erfindung betrifft eine Druckfarbe oder Lack für den Sicherheitsdruck, sowie ein mit einer solchen Druckfarbe bedrucktes Sicherheitssubstrat. Die Erfindung betrifft auch Verfahren zum Versehen eines Sicherheitssubstrats mit einer durchgetrockneten Intagliodruckschicht unter Verwendung einer derartigen Druckfarbe oder eines derartigen Lacks.

Für die farbliche Ausgestaltung von Druckprodukten werden typischerweise Druckfarben verwendet, die Pigmente, ein Bindemittel und verschiedene Additive enthalten. Die Pigmente sind für den farblichen Eindruck verantwortlich, haben aber auch starken Einfluss auf die Verarbeitungseigenschaften wie Rheologie und Trocknung. Die Verarbeitungseigenschaften und die Beständigkeit des Endproduktes sind dabei maßgeblich insbesondere durch die Zusammensetzung des Bindemittels und der Additive bestimmt.

Ein wesentliches Merkmal von Druckfarben ist die Art ihrer Trocknung, also ihrer Verfestigung. In der Druckindustrie haben sich derzeit drei Trocknungssysteme durchgesetzt: oxidativ trocknend, wegschlagend und UVhärtend. Während die wegschlagenden Farbsysteme ausschließlich durch Wegschlagen des Lösemittels in das Substrat trocknen, findet bei oxidativ und UV-härtenden Farbsystemen eine Polymerisation statt. Die Polymerisation von UV-härtenden Farbsystemen wird durch Bestrahlung mit UV-A oder UB-B Strahlung initiiert. Bei oxidativ-trocknenden Farbsystemen wird die Polymerisation durch Kontakt mit Sauerstoff gestartet.

Das Farbsystem wird je nach den geforderten Eigenschaften an das Endprodukt ausgewählt. Die polymerisierbaren Farbsysteme zeigen im Vergleich zu den wegschlagenden Farbsystemen deutlich höhere Beständigkeiten des Endprodukts, wohingegen die wegschlagenden Systeme schnell trocknen und preislich günstig sind. Daher kommen diese Farbsysteme vor allem im Zeitungsdruck zum Einsatz. Die beiden polymerisierbaren Farbsysteme unterscheiden sich insbesondere bei der Trocknungsdauer. Während die Trocknung bei UV-Farbsystemen direkt nach der UV-Bestrahlung beginnt und je nach Trocknungsmechanismus (radikalisch oder kationisch) sofort oder nach etwa 24 Stunden abgeschlossen ist, kann es bei der chemischen Vernetzung von oxidativen Farbsystemen bis zu 96 Stunden und mehr dauern bis die bedruckten Bogen weiterverarbeitet werden können.

Trotz der längeren Trocknungsdauer der oxidativen Farbsysteme haben sie wichtige Anwendungsbereiche, in denen andere Trocknungssysteme weniger geeignet sind. Beispielsweise können wärmeempfindliche Bedruckstoffe aufgrund der hohen Wärmeentwicklung am UV-Strahler nur bedingt mit UV-Farbsystemen bedruckt werden. Darüber hinaus gibt es einige spezielle Druckverfahren, die aufgrund ihrer jeweiligen Eigenheiten ausschließlich mit oxidativ trocknenden Druckfarben arbeiten. Eine weitere, vor allem im Sicherheitsdruck wichtige Anwendung oxidativer Farbsysteme stellt der Stahlstichdruck (in dieser Beschreibung auch als Intagliodruck bezeichnet) dar. Beim Stahlstichdruck wird verfahrensbedingt in der Regel mehr als 50% der eingesetzten Druckfarbe als Abfall entsorgt. Neben den Verarbeitungseigenschaften der Druckfarbe und den Beständigkeiten der getrockneten Farbschichten spielt daher auch der ökologische Aspekt und die Kosten der zu entsorgenden Druckfarbe eine bedeutende Rolle. Die Entsorgung flüssiger UV-Druckfarbe ist deutlich teurer als bei oxidativ-trocknenden Druckfarben. Hinzu kommt der höhere Preis der UV- Rohstoffe.

Die Trocknung oxidativer Druckfarben erfolgt meist durch eine chemische Vernetzung, bei der Doppelbindungen der ungesättigten Fettsäuren des Bindemittels aufgebrochen werden und die Moleküle durch Bildung von Sauerstoffbrücken miteinander quervernetzen. Bei dieser Art der Trocknung kann es jedoch mehrere Tage andauern, bis eine Weiterverarbeitung möglich ist. Daher werden oxidativen Druckfarben oft Sikkative zugesetzt, die als Trockenstoffe die Vernetzung beschleunigen. Als Sikkative werden beispielsweise Metallsalze wie mangan- oder eisenhaltige Verbindungen eingesetzt. Diese Sikkative werden als Oberflächentrockner bezeichnet, da sie den Luftsauerstoff in die Farbschicht vermitteln und dadurch die oxidative Quervernetzung der oberen Farbschichten beschleunigen. Insbesondere bei dicken Farbschichten besteht jedoch der Nachteil, dass die tieferliegenden Farbschichtbereiche aufgrund des fehlenden direkten Kontakts zu Luftsauerstoff langsamer trocknen als die höheren Farbschichtbereiche. Problematisch sind neben hohen Farbschichtdicken auch sehr glatte Substrate, beispielsweise Kunststofffolien, bei denen sich im Stapel zwischen den einzelnen Bogen nur sehr wenig bis gar keine Luft befindet.

Um die Trocknung auch unter Abwesenheit von Luftsauerstoff zu beschleunigen wurden bereits früher Peroxoverbindungen eingesetzt. Diese Verbindungen geben bei Kontakt mit Wasser ein Sauerstoffatom ab, wodurch auch bei Abwesenheit von Luftsauerstoff die oxidative Quervernetzung von Druckfarbenschichten gestartet werden kann. Diese Trockner bewirken eine Trocknung sowohl in den oberen als auch in den tieferliegenden Farbschichten, weswegen sie als Durchtrockner bezeichnet werden.

Da die genannten Peroxoverbindungen allerdings chemisch instabil sind, geben sie auch ohne Wasserkontakt nach einiger Zeit Sauerstoffatome ab, weswegen Wasser für den Einsatz nicht zwingend notwendig ist. Auf der anderen Seite beginnt dadurch nach Zugabe des Sikkativs die Trocknung nach einer bestimmten Zeit von selbst. Die Zeit zwischen Zugabe des Sikkativs und dem ungewollten Beginn der Trocknung wird als Topfzeit bezeichnet. Ist die Topfzeit erreicht, muss die restliche Druckfarbe vollständig aus dem Farbwerk entfernt und entsorgt werden. Wird die Topfzeit nicht beachtet, beginnt die Druckfarbe bereits im Farbkasten und auf den Farbwalzen im Farbwerk zu trocknen. Diese hat einerseits erhebliche Auswirkungen auf die Druckqualität, andererseits ist eine Reinigung des Farbwerks von getrockneten Farbschichten sehr aufwendig.

All dies gilt in besonderem Maß für den Intagliodruck, da die begrenzte Topfzeit einen regelmäßigen Austausch des eingesetzten Farbvorrats notwendig macht und dieser Austausch im Intagliodruck verglichen mit dem Offsetdruck aufgrund des wesentlich höheren Farbverbrauchs mit einem deutlich höheren Aufwand verbunden ist. Aufgrund des hohen Farbverbrauchs werden die Farben in Hobbocks zu 25 kg an der Druckmaschine bereitgestellt und mittels Farbpumpen direkt in das Farbwerk gepumpt. Nach Erreichen der Topfzeit müsste die gesamte Restfarbe im Hobbock entsorgt werden. Je nach Motiv variiert jedoch der Farbverbrauch, so dass besonders bei motivbedingt geringer Farbabnahme oft ein Großteil der im Hobbock bereitgestellten Farbe entsorgt werden müsste.

Ausgehend davon liegt der Erfindung die Aufgabe zugrunde, die genannten Nachteile des Stands der Technik zu überwinden. Insbesondere soll eine Druckfarbe oder ein Lack mit langer Topfzeit bereitgestellt werden, mit deren Hilfe dennoch rasch trocknende, insbesondere durchtrocknende Intagliodruckschichten auf ein Sicherheitssubstrat aufgebracht werden können. Die Erfindung soll auch ein zugehöriges bedrucktes Sicherheitssubstrat und Herstellungsverfahren angeben.

Diese Aufgabe wird durch die Merkmale der unabhängigen Ansprüche gelöst. Weiterbildungen der Erfindung sind Gegenstand der Unteransprüche. Die Erfindung stellt eine Druckfarbe oder einen Lack für den Sicherheitsdruck bereit, mit einem Bindemittel und einer Vielzahl von in dem Bindemittel dispergierten Mikrokapseln, die eine Kapselhülle und ein von der Kapselhülle eingeschlossenes Kernmaterial aufweisen, wobei das Kernmaterial durch eine als Trockenstoff wirkende Peroxoverbindung gebildet ist, und die Kapselhülle durch Einwirkung von Druck, Temperatur und/oder UV-Strahlung öffenbar ist, um durch Freisetzung des Kernmaterials den Trocknungsvorgang der Druckfarbe oder des Lacks auszulösen.

In einer vorteilhaften Ausgestaltung umfasst das Kapselmaterial Melaminformaldehyd, Polyurethan, ein natürliches oder künstliches Harz, Gelatine, Gummi Arabicum oder ein Acrylat. Mit besonderem Vorteil umfasst das Kapselmaterial ein Wachs, insbesondere ein Carnaubawachs, oder, ganz besonders bevorzugt, ein mikrokristallines Polyethylenwachs. Da bei der Aktivierung der Mikrokapseln die Kapselhülle zerstört wird, das Kapselmaterial jedoch in der Druckfarbe verbleibt, ist es von besonderem Vorteil, wenn das Kapselmaterial nach der Aktivierung eine weitere gewünschte Funktion in der Druckfarbe wahrnimmt. Mikrokristallines Wachs ist hier hervorragend geeignet, da es neben der Abliegefestigkeit auch Glanz, Glätte und Scheuerfestigkeit der aufgedruckten Schicht erhöht.

Als Bindemittelsystem kommen mit Vorteil Verbindungen mit Alkydharzen, mit trocknenden Ölen, wie etwa Leinöl oder Holzöl, mit Kolophonium oder mit Mineralölen zum Einsatz.

In einer vorteilhaften Weiterbildung der Erfindung sind in dem Bindemittel zusätzlich zweite Mikrokapseln dispergiert, die eine Kapselhülle und ein von der Kapselhülle eingeschlossenes Kernmaterial aufweisen, wobei das Kernmaterial durch Wasser gebildet ist, und die Kapselhülle der zweiten Mikrokapseln durch Einwirkung von Druck, Temperatur und/oder UV-Strahlung öffenbar ist, um durch Freisetzung des Wassers den Trocknungsvorgang der Druckfarbe oder des Lacks durch die Peroxoverbindung zu beschleunigen.

In einer besonders vorteilhaften Ausgestaltung ist die Druckfarbe eine Intagliodruckfarbe.

Es versteht sich, dass die genannte Druckfarbe neben dem Bindemittel und den dispergierten Mikrokapseln auch Farbmittel, insbesondere farbgebende Pigmente aufweist.

Die Erfindung enthält auch ein bedrucktes Sicherheitssubstrat mit einer Druck- oder Lackschicht aus einer Druckfarbe oder einem Lack der oben genannten Art.

Mit Vorteil ist die genannte Druckschicht eine Intagliodruckschicht, insbesondere eine Intagliodruckschicht mit einer Dicke von 5 µm bis 15 µm, vorzugsweise von 8 µm bis 10 µm. Besonders dicke Intagliodruckschichten können vorteilhaft auch eine Dicke oberhalb von 15 µm, insbesondere sogar von 50 µm oder mehr aufweisen.

In einer anderen, ebenfalls vorteilhaften Variante ist die genannte Druckschicht eine Untergrunddruckschicht, auf der zumindest bereichsweise eine Intagliodruckschicht aufgebracht ist. Bei einer weiteren, gleichfalls vorteilhaften Variante ist die genannte Lackschicht eine transparente Untergrundlackschicht, vorzugsweise eine vollflächige transparente Untergrundlackschicht, auf der zumindest bereichsweise eine Intagliodruckschicht aufgebracht ist.

Das Sicherheitssubstrat ist bevorzugt ein Papiersubstrat, ein Papier mit Synthesefasern, ein Verbundsubstrat, insbesondere mit der Schichtenfolge Folie/Papier/Folie oder Papier/Folie/Papier, oder ein Kunststoffsubstrat, insbesondere ein Polymersubstrat.

Die Erfindung enthält weiter ein Verfahren zum Versehen eines Sicherheitssubstrats mit einer durchgetrockneten Intagliodruckschicht, bei dem das Sicherheitssubstrat mit einer Intagliodruckfarbe der oben genannten Art bedruckt wird, und die Kapselhüllen der in dem Bindemittel der Intagliodruckfarbe dispergierten Mikrokapseln durch Einwirkung von Druck, Temperatur und/oder UV-Strahlung geöffnet werden, um das durch eine Peroxoverbindung wirkende Kernmaterial freizusetzen.

Die Mikrokapseln werden dabei vorteilhaft beim Aufdrucken der Intagliodruckfarbe im Druckspalt durch die Einwirkung des dort herrschenden Drucks und/oder der dort herrschenden Temperatur geöffnet um den Trocknungsvorgang der Intagliodruckfarbe auszulösen. Alternativ können die Mikrokapseln auch nach dem Aufdrucken der Intagliodruckfarbe insbesondere durch UV-Strahlung, aber auch durch Druck- oder Temperatureinwirkung geöffnet und dadurch der Trocknungsvorgang ausgelöst werden.

Die Erfindung enthält schließlich auch ein Verfahren zum Versehen eines Sicherheitssubstrats mit einer durchgetrockneten Intagliodruckschicht, bei dem das Sicherheitssubstrat mit einer Untergrundschicht mit einer Druckfarbe oder einem Lack der oben genannten Art bedruckt wird, auf die Untergrundschicht eine Intagliodruckschicht aufgedruckt wird, und die Kapselhüllen der in dem Bindemittel der Druckfarbe oder dem Lack dispergierten Mikrokapseln durch die Einwirkung von Druck, Temperatur und/ oder UV-Strahlung geöffnet werden, um das durch eine Peroxoverbindung wirkende Kernmaterial freizusetzen und die Trocknung der auf der Untergrundschicht aufgedruckten Intagliodruckschicht auszulösen. Die Intagliodruckschicht kann bei dieser Ausgestaltung mit herkömmlicher Intagliodruckfarbe gedruckt sein, sie kann aber natürlich auch mit Hilfe einer erfindungsgemäßen Intagliodruckfarbe mit dispergierten Mikrokapseln gedruckt sein.

Die Mikrokapseln der Druckfarbe oder des Lacks werden in einer vorteilhaften Verfahrensvariante beim Aufdrucken der Intagliodruckschicht im Druckspalt durch die Einwirkung des dort herrschenden Drucks und/ oder der dort herrschenden Temperatur geöffnet, um den Trocknungsvorgang auszulösen. Alternativ können die Mikrokapseln auch nach dem Aufdrucken der Intagliodruckschicht insbesondere durch UV-Strahlung, aber auch durch Druck- oder Temperatureinwirkung geöffnet und dadurch der Trocknungsvorgang ausgelöst werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch eine erfindungsgemäße Intagliodruckfarbe,
- Fig. 2: schematisch ein erfindungsgemäßes Sicherheitspapier mit einer dicken, aufgedruckten und bereits getrockneten Intagliodruckschicht;
- Fig. 3: schematisch ein Sicherheitspapier nach einem anderen Ausführungsbeispiel der Erfindung, bei dem die Mikrokapseln nicht der Druckfarbe der Intagliodruckschicht beigemischt sind, sondern in der Druckfarbe einer darunterliegenden Untergrunddruckschicht vorliegen; und
- Fig. 4: eine Abwandlung des Ausführungsbeispiels der Fig. 3, bei der die Mikrokapseln in einer unter der Intagliodruckschicht liegenden Untergrundlackschicht vorliegen.

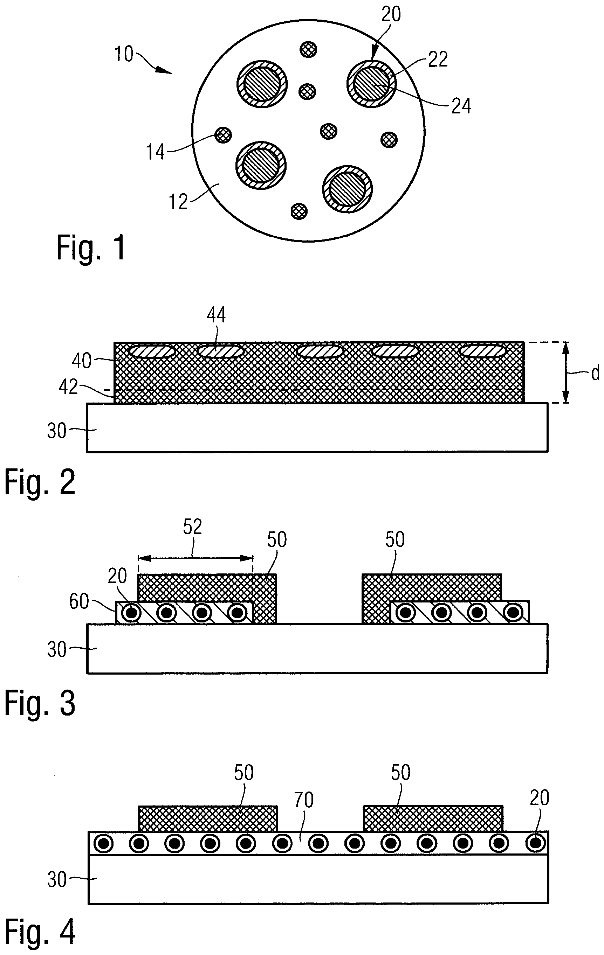

Die Erfindung wird nun am Beispiel des Aufdruckens einer Intagliodruckschicht auf ein Sicherheitspapier für Banknoten erläutert. Figur 1 zeigt hierzu schematisch eine Intagliodruckfarbe 10 mit einem Bindemittel 12, farbgebenden Pigmenten 14 und einer Vielzahl von in dem Bindemittel 12 dispergierten Mikrokapseln 20. Die Mikrokapseln 20 weisen jeweils eine Kapselhülle 22 aus einem mikrokristallinen Polyethylenwachs und ein von der Kapselhülle 22 eingeschlossenes Kernmaterial 24 auf, welches durch eine als Trockenstoff wirkende Peroxoverbindung gebildet ist.

Im verkapselten Zustand ist das Kernmaterial 24 stabilisiert und vor Kontakt mit außenliegendem Material, insbesondere vor Wasserkontakt geschützt. Dadurch wird eine vorzeitige Reaktion und Abgabe von reaktivem Sauerstoff aus der Peroxoverbindung verhindert, so dass die Intagliodruckfarbe 10 eine gegenüber herkömmlichen Druckfarben signifikant verlängerte, im Idealfall sogar unbegrenzte Topfzeit aufweist.

Die Mikroverkapselung der Peroxoverbindung 24 erfolgt dabei auf an sich bekannte Weise durch Emulsionspolymerisation, Sprühtrocknung oder andere Verkapselungsverfahren.

Die Dicke der Kapselhülle 22 ist dabei so gewählt, dass die entstehenden Mikrokapseln 20 mechanisch so stabil sind, dass sie nicht bereits beim Prozess des Zusammenrührens mit der Druckfarbe oder im Farbwerk zerstört werden. Die mit mikrokristallinem Polyethylenwachs als Kapselhülle 22 gebildeten Mikrokapseln sind auch chemisch stabil, werden also durch das umgebende Medium der Druckfarbe 10 nicht zerstört. Typischerweise liegt die Schichtdicke der Kapselhülle zwischen 0,2 µm und 2 µm.

Figur 2 zeigt ein Sicherheitspapier 30, beispielsweise das Papiersubstrat einer Banknote, mit einer aufgedruckten und bereits getrockneten Intagliodruckschicht 40. Die Schichtdicke d derartiger Intagliodruckschichten 40 ist besonders groß und liegt vorteilhaft zwischen 5 µm und 15 µm, insbesondere zwischen 8 µm und 10 µm. Diese großen Schichtdicken erschweren herkömmlich den Trocknungsvorgang insbesondere der tieferliegenden Farbschichtbereiche 42 der Intagliodruckschichten.

Die in Fig. 2 gezeigte Intagliodruckschicht 40 wurde unter Verwendung einer Intagliodruckfarbe 10 der in Zusammenhang mit Fig. 1 beschriebenen Art erzeugt. Durch den beim Intagliodruck im Druckspalt herrschenden hohen Druck und insbesondere die dort herrschende hohe Temperatur von etwa 80 °C werden die im Bindemittel dispergierten Mikrokapseln 20 geöffnet und dadurch die als Trockenstoff wirkenden Peroxoverbindungen freigesetzt. Das freigesetzte Peroxid beginnt zu reagieren und bildet freien reaktiven Sauerstoff, der die oxidative Quervernetzung und damit die Trocknung der Druckfarbe beschleunigt.

Da eine Vielzahl von Mikrokapseln 20 in dem Bindemittel dispergiert sind, findet die Trocknung gleichmäßig sowohl in den höherliegenden Farbschichtbereichen als auch den herkömmlich problematischen tieferliegenden Farbschichtbereichen 42 statt, so dass eine Durchtrocknung der Farbschicht erreicht wird.

Ein besonderer Vorteil besteht vorliegend darin, dass die Trocknung der Intagliodruckschicht 40 durch den Aufdruckvorgang im Druckspalt selbst ausgelöst wird, so dass kein zusätzlicher Aktivierungsschritt zur Öffnung der Mikrokapseln erforderlich ist und die Trocknung zudem zum frühestmöglichen Zeitpunkt initiiert wird.

Das Kapselmaterial ist im Ausführungsbeispiel durch ein mikrokristallines Polyethylenwachs gebildet, das beim Aufschmelzen im Druckspalt nicht zur das Kernmaterial freisetzt, sondern auch selbst in der Intagliodruckschicht 40 verteilt wird. Beim Abkühlen wandert das Wachs rasch an die Oberfläche der Druckschicht (Bezugszeichen 44) und erhöht dort die Abliegefestigkeit der Schicht. Auch Glanz, Glätte und Scheuerfestigkeit der Intagliodruckschicht 40 werden durch das verteilte Wachs 44 erhöht. Das Kapselmaterial 22 erfüllt in diesem Fall somit nach der Aktivierung der Kapseln 20 mit besonderem Vorteil weitere erwünschte Funktionen in der Druckschicht 40.

Bei dem weiteren Ausführungsbeispiel der Fig. 3 sind die Mikrokapseln nicht der Druckfarbe der Intagliodruckschicht 50 beigemischt, sondern liegen in der Druckfarbe einer darunterliegenden Untergrunddruckschicht 60 vor. Dabei wurde auf das Sicherheitssubstrat 30 zunächst unter Verwendung einer erfindungsgemäßen Druckfarbe eine Untergrunddruckschicht 60 aufgedruckt und darauf, die Untergrunddruckschicht 60 teilweise überlappend, eine herkömmliche Intagliodruckschicht 50. Figur 3 zeigt die aufgedruckten Schichten schematisch mit den noch nicht aktivierten Mikrokapseln 20 in der Untergrunddruckschicht 60.

Die Kapselhüllen 22 können dabei durch UV-Strahlung öffenbar sein und erst nach dem Aufdrucken von Untergrunddruckschicht 60 und Intagliodruckschicht 50 aktiviert werden. Die Kapselhüllen 22 können aber auch durch Druck- und/oder Temperatureinwirkung öffenbar sein. In diesem Fall ist es auch möglich, die Mikrokapseln der Untergrunddruckschicht 60 beim Aufdruckvorgang der Intagliodruckschicht 50 durch den hohen Druck und/oder die hohe Temperatur im Druckspalt zu aktivieren. Die als Trockenstoff wirkenden Peroxoverbindungen werden dann freigesetzt und bilden freien reaktiven Sauerstoff, der nicht nur die Trocknung der Untergrunddruckschicht 60, sondern in den überlappenden Bereichen 52 auch die oxidative Quervernetzung in der angrenzenden Intagliodruckschicht 50 beschleunigt.

Eine weitere Variante ist in dem Ausführungsbeispiel der Fig. 4 gezeigt, in dem die Mikrokapseln ebenfalls nicht der Intagliodruckschicht 50 selbst beigemischt sind, sondern in einer darunterliegenden Untergrundlackschicht 70 eines transparenten Drucklacks vorliegen. Bei dieser Variante wird auf das Sicherheitssubstrat 30 zunächst unter Verwendung eines erfindungsgemäßen Lacks eine vollflächige Untergrundlackschicht 70 aufgedruckt auf diese Lackschicht dann in den gewünschten Bereichen eine herkömmliche Intagliodruckschicht 50. Figur 4 zeigt die aufgedruckten Schichten schematisch mit den noch nicht aktivierten Mikrokapseln 20 in der Untergrundlackschicht 70.

Auch im Ausführungsbeispiel der Fig. 4 können die Kapselhüllen 22 durch UV-Strahlung öffenbar sein und erst nach dem Aufdrucken von Untergrundlackschicht 70 und Intagliodruckschicht 50 aktiviert werden. Die Kapselhüllen 22 können aber auch durch Druck- und/ oder Temperatureinwirkung öffenbar sein, wobei es dann auch möglich ist, die Mikrokapseln der Untergrundlackschicht 70 beim Aufdruckvorgang der Intagliodruckschicht 50 zu aktivieren. Die als Trockenstoff wirkenden Peroxoverbindungen werden dann freigesetzt und bilden freien reaktiven Sauerstoff, der nicht nur die Trocknung der Untergrundlackschicht 70, sondern auch die oxidative Quervernetzung in der angrenzenden Intaglioschicht 50 beschleunigt.

### Bezugszeichenliste

- 10: Intagliodruckfarbe
- 12: Bindemittel
- 14: farbgebende Pigmente
- 20: Mikrokapseln
- 22: Kapselhülle
- 24: Kernmaterial
- 30: Sicherheitspapier
- 40: Intagliodruckschicht
- 42: tieferliegende Farbschichtbereiche
- 44: Wachs an der Oberfläche der Druckschicht
- 50: Intagliodruckschicht
- 52: überlappende Bereiche
- 60: Untergrunddruckschicht
- 70: Untergrundlackschicht

## Patentansprüche

1. Druckfarbe oder Lack für den Sicherheitsdruck, mit einem Bindemittel und einer Vielzahl von in dem Bindemittel dispergierten Mikrokapseln, die eine Kapselhülle und ein von der Kapselhülle eingeschlossenes Kernmaterial aufweisen, wobei das Kernmaterial durch eine als Trockenstoff wirkende Peroxoverbindung gebildet ist, und die Kapselhülle durch Einwirkung von Druck, Temperatur und/oder UV-Strahlung öffenbar ist, um durch Freisetzung des Kernmaterials den Trocknungsvorgang der Druckfarbe oder des Lacks auszulösen.

2. Druckfarbe oder Lack nach Anspruch 1, **dadurch gekennzeichnet, dass** das Kapselmaterial Melaminformaldehyd, Polyurethan, ein natürliches oder künstliches Harz, Gelatine, Gummi Arabicum oder ein Acrylat umfasst.

3. Druckfarbe oder Lack nach Anspruch 1, **dadurch gekennzeichnet, dass** das Kapselmaterial ein Wachs, insbesondere ein Carnaubawachs oder, besonders bevorzugt, ein mikrokristallines Polyethylenwachs umfasst.

4. Druckfarbe oder Lack nach wenigstens einem der Ansprüche 1 bis 3, **dadurch gekennzeichnet, dass** als Bindemittelsystem Verbindungen mit Alkydharzen, mit trocknenden Ölen, wie etwa Leinöl oder Holzöl, mit Kolophonium oder mit Mineralölen zum Einsatz kommen.

5. Druckfarbe oder Lack nach wenigstens einem der Ansprüche 1 bis 4, **dadurch gekennzeichnet, dass** in dem Bindemittel zusätzlich zweite Mikrokapseln dispergiert sind, die eine Kapselhülle und ein von der Kapselhülle eingeschlossenes Kernmaterial aufweisen, wobei das Kernmaterial durch Wasser gebildet ist, und die Kapselhülle der zweiten Mikrokapseln durch Einwirkung von Druck, Temperatur und/oder UV-Strahlung öffenbar ist, um durch Freisetzung des Wassers den Trocknungsvorgang der Druckfarbe oder des Lacks durch die Peroxoverbindung zu beschleunigen.

6. Druckfarbe nach wenigstens einem der Ansprüche 1 bis 5, **dadurch gekennzeichnet, dass** die Druckfarbe eine Intagliodruckfarbe ist.

7. Bedrucktes Sicherheitssubstrat mit einer Druck- oder Lackschicht aus einer Druckfarbe oder einem Lack nach einem der Ansprüche 1 bis 6

8. Sicherheitssubstrat nach Anspruch 7, **dadurch gekennzeichnet, dass** die genannte Druckschicht eine Intagliodruckschicht ist, insbesondere eine Intagliodruckschicht mit einer Dicke zwischen 5 µm und 15 µm, insbesondere zwischen 8 µm und 10 µm.

9. Sicherheitssubstrat nach Anspruch 7, **dadurch gekennzeichnet, dass** die genannte Druckschicht eine Untergrunddruckschicht ist, auf der zumindest bereichsweise eine Intagliodruckschicht aufgebracht ist.

10. Sicherheitssubstrat nach Anspruch 7, **dadurch gekennzeichnet, dass** die genannte Lackschicht eine transparente Untergrundlackschicht, vorzugsweise eine vollflächige transparente Untergrundlackschicht ist, auf der zumindest bereichsweise eine Intagliodruckschicht aufgebracht ist.

11. Sicherheitssubstrat nach einem der Ansprüche 7 bis 10, **dadurch gekennzeichnet, dass** das Sicherheitssubstrat ein Papiersubstrat, ein Papier mit Synthesefasern, ein Verbundsubstrat, insbesondere mit der Schichtenfolge Folie/Papier/Folie oder Papier/Folie/Papier, oder ein Kunststoffsubstrat, insbesondere ein Polymersubstrat ist.

12. Verfahren zum Versehen eines Sicherheitssubstrats mit einer durchgetrockneten Intagliodruckschicht, bei dem das Sicherheitssubstrat mit einer Intagliodruckfarbe nach Anspruch 6 bedruckt wird, und die Kapselhüllen der in dem Bindemittel der Intagliodruckschicht dispergierten Mikrokapseln durch Einwirkung von Druck, Temperatur und/oder UV-Strahlung geöffnet werden, um das durch eine Peroxoverbindung wirkende Kernmaterial freizusetzen.

13. Verfahren nach Anspruch 12, **dadurch gekennzeichnet, dass** die Mikrokapseln beim Aufdrucken der Intagliodruckfarbe im Druckspalt durch die Einwirkung des dort herrschenden Drucks und/ oder der dort herrschenden Temperatur geöffnet werden um den Trocknungsvorgang der Intagliodruckfarbe auszulösen.

14. Verfahren zum Versehen eines Sicherheitssubstrats mit einer durchgetrockneten Intagliodruckschicht, bei dem das Sicherheitssubstrat mit einer Untergrundschicht mit einer Druckfarbe oder einem Lack nach einem der Ansprüche 1 bis 6 bedruckt wird, auf die Untergrundschicht eine Intagliodruckschicht aufgedruckt wird, und die Kapselhüllen der in dem Bindemittel der Druckfarbe oder dem Lack dispergierten Mikrokapseln durch die Einwirkung von Druck, Temperatur und/oder UV-Strahlung geöffnet werden, um das durch eine Peroxoverbindung wirkende Kernmaterial freizusetzen und die Trocknung der auf der Druckfarbe oder dem Lack aufgedruckten Intagliodruckschicht auszulösen.

15. Verfahren nach Anspruch 14, **dadurch gekennzeichnet, dass** die Mikrokapseln der Druckfarbe oder des Lacks beim Aufdrucken der Intagliodruckschicht im Druckspalt durch die Einwirkung des dort herrschenden Drucks und/ oder der dort herrschenden Temperatur geöffnet werden um den Trocknungsvorgang auslösen.

## Claims

1. A printing ink or lacquer for security printing, having a binder and, dispersed in the binder, a plurality of microcapsules that comprise a capsule shell and a core material enclosed by the capsule shell, the core material being formed by a peroxo compound that acts as a drying agent, and the capsule shell being openable by the action of pressure, temperature and/or UV radiation in order to trigger the drying process of the printing ink or of the lacquer by releasing the core material.

2. The printing ink or lacquer according to claim 1, **characterized in that** the capsule material comprises melamine formaldehyde, polyurethane, a natural or artificial resin, gelatin, gum arabic or an acrylate.

3. The printing ink or lacquer according to claim 1, **characterized in that** the capsule material comprises a wax, especially a carnauba wax or, particularly preferably, a microcrystalline polyethylene wax.

4. The printing ink or lacquer according to at least one of claims 1 to 3, **characterized in that** compounds with alkyd resins, with drying oils, such as linseed oil or wood oil, with colophony or with mineral oils are used as the binder system.

5. The printing ink or lacquer according to at least one of claims 1 to 4, **characterized in that** there are additionally dispersed in the binder second microcapsules that comprise a capsule shell and a core material enclosed by the capsule shell, the core material being formed by water, and the capsule shell of the second microcapsules being openable by the action of pressure, temperature and/or UV radiation in order to accelerate the drying process of the printing ink or of the lacquer by the peroxo compound by releasing the water.

6. The printing ink according to at least one of claims 1 to 5, **characterized in that** the printing ink is an intaglio printing ink.

7. A printed security substrate having a printing or lacquer layer composed of a printing ink or a lacquer according to one of claims 1 to 6.

8. The security substrate according to claim 7, **characterized in that** the said printing layer is an intaglio printing layer, especially an intaglio printing layer having a thickness between 5 µm and 15 µm, especially between 8 µm and 10 µm.

9. The security substrate according to claim 7, **characterized in that** the said printing layer is a background printing layer on which an intaglio printing layer is applied in at least some regions.

10. The security substrate according to claim 7, **characterized in that** the said lacquer layer is a transparent background lacquer layer, preferably a contiguous transparent background lacquer layer on which an intaglio printing layer is applied in at least some regions.

11. The security substrate according to one of claims 7 to 10, **characterized in that** the security substrate is a paper substrate, a paper with synthetic fibers, a composite substrate, especially having the layer sequence foil/paper/foil or paper/foil/paper, or a plastic substrate, especially a polymer substrate.

12. A method for furnishing a security substrate with a completely dry intaglio printing layer, in which the security substrate is printed on with an intaglio printing ink according to claim 6, and the capsule shells of the microcapsules dispersed in the binder of the intaglio printing layer are opened by the action of pressure, temperature and/or UV radiation in order to release the core material that acts through a peroxo compound.

13. The method according to claim 12, **characterized in that,** when imprinting the intaglio printing ink, the microcapsules are opened in the printing nip by the action of the pressure prevailing there and/or the temperature prevailing there in order to trigger the drying process of the intaglio printing ink.

14. A method for furnishing a security substrate with a completely dry intaglio printing layer, in which the security substrate having a background layer is printed on with a printing ink or a lacquer according to one of claims 1 to 6, an intaglio printing layer is imprinted on the background layer, and the capsule shells of the microcapsules dispersed in the binder of the printing ink or the lacquer are opened by the action of pressure, temperature and/or UV radiation in order to release the core material that acts through a peroxo compound and to trigger the drying of the intaglio printing layer imprinted on the printing ink or the lacquer.

15. The method according to claim 14, **characterized in that,** when printing the intaglio printing layer, the microcapsules of the printing ink or of the lacquer are opened in the printing nip by the action of the pressure prevailing there and/or of the temperature prevailing there in order to trigger the drying process.

## Revendications

1. Encre d'impression ou vernis pour impression de sécurité, avec un liant et une pluralité de microcapsules dispersées dans le liant, lesquelles présentent une enveloppe de capsule et un matériau de noyau enfermé par l'enveloppe de capsule, dans laquelle le matériau de noyau est formé par un composé peroxo agissant en tant que siccatif et l'enveloppe de capsule peut être ouverte sous l'action d'une pression, de la température et/ou d'un rayonnement UV afin de, par libération du matériau de noyau, déclencher le processus de séchage de l'encre d'impression ou du vernis.

2. Encre d'impression ou vernis selon la revendication 1, **caractérisée en ce que** le matériau de capsule comprend du mélamine-formaldéhyde, du polyuréthane, une résine naturelle ou artificielle, de la gélatine, de la gomme arabique ou un acrylate.

3. Encre d'impression ou vernis selon la revendication 1, **caractérisée en ce que** le matériau de capsule comprend une cire, en particulier une cire de carnauba ou, de manière particulièrement préférée, une cire de polyéthylène microcristalline.

4. Encre d'impression ou vernis selon l'une au moins des revendications 1 à 3, **caractérisée en ce que** l'on utilise, en tant que système de liant, des composés avec des résines alkydes, avec des huiles sèches telles que de l'huile de lin ou de l'abrasin, avec de la colophane ou avec des huiles minérales.

5. Encre d'impression ou vernis selon l'une au moins des revendications 1 à 4, **caractérisée en ce que**, dans le liant, des deuxièmes microcapsules sont additionnellement dispersées, lesquelles présentent une enveloppe de capsule et un matériau de noyau enfermé par l'enveloppe de capsule, dans laquelle le matériau de noyau est formé par de l'eau et l'enveloppe de capsule des deuxièmes microcapsules peut être ouverte sous l'action d'une pression, de la température et/ou d'un rayonnement UV afin de, par libération de l'eau, accélérer le processus de séchage de l'encre d'impression ou du vernis grâce au composé peroxo.

6. Encre d'impression selon l'une au moins des revendications 1 à 5, **caractérisée en ce que** l'encre d'impression est une encre d'impression intaglio.

7. Substrat de sécurité imprimé avec une couche d'impression ou de vernis à base d'une encre d'impression ou d'un vernis selon l'une des revendications 1 à 6.

8. Substrat de sécurité selon la revendication 7, **caractérisé en ce que** ladite couche d'impression est une couche d'impression intaglio, en particulier une couche d'impression intaglio d'une épaisseur comprise entre 5 µm et 15 µm, en particulier comprise entre 8 µm et 10 µm.

9. Substrat de sécurité selon la revendication 7, **caractérisé en ce que** ladite couche d'impression est une couche d'impression de base sur laquelle est appliquée, au moins par endroits, une couche d'impression intaglio.

10. Substrat de sécurité selon la revendication 7, **caractérisé en ce que** ladite couche de vernis est une couche de vernis de base transparente, de préférence une couche de vernis de base transparente sur toute la surface, sur laquelle une couche d'impression intaglio est appliquée au moins par endroits.

11. Substrat de sécurité selon l'une des revendications 7 à 10, **caractérisé en ce que** le substrat de sécurité est un substrat en papier, un papier avec des fibres synthétiques, un substrat composite, en particulier avec la succession de couches feuille/papier/feuille ou papier/feuille/papier, ou un substrat en matière plastique, en particulier un substrat polymère.

12. Procédé pour munir un substrat de sécurité d'une couche d'impression intaglio complètement sèche où le substrat de sécurité est imprimé avec une encre d'impression intaglio selon la revendication 6 et les enveloppes de capsule des microcapsules dispersées dans le liant de la couche d'impression intaglio sont ouvertes sous l'action d'une pression, de la température et/ou d'un rayonnement UV pour libérer le matériau de noyau agissant grâce à un composé peroxo.

13. Procédé selon la revendication 12, **caractérisé en ce que** les microcapsules, lors de l'impression de l'encre d'impression intaglio dans la ligne de contact, sont ouvertes sous l'action de la pression qui y règne et/ou de la température qui y règne pour déclencher le processus de séchage de l'encre d'impression intaglio.

14. Procédé pour munir un substrat de sécurité d'une couche d'impression intaglio complètement sèche où le substrat de sécurité avec une couche de base est imprimé avec une encre d'impression ou un vernis selon l'une des revendications 1 à 6, une couche d'impression intaglio étant imprimée sur la couche de base, et les enveloppes de capsule des microcapsules dispersées dans le liant de l'encre d'impression ou du vernis étant ouvertes sous l'action d'une pression, de la température et/ou d'un rayonnement UV pour libérer le matériau de noyau agissant grâce à un composé peroxo et déclencher le séchage de la couche d'impression intaglio imprimée sur l'encre d'impression ou le vernis.

15. Procédé selon la revendication 14, **caractérisé en ce que** les microcapsules de l'encre d'impression ou du vernis, lors de l'impression de la couche d'impression intaglio dans la ligne de contact, sont ouvertes sous l'action de la pression qui y règne et/ou de la température qui y règne pour déclencher le processus de séchage.
